# EUROPÄISCHE PATENTSCHRIFT

(11) **EP 1 911 698 B1**
(45) Veröffentlichungstag und Bekanntmachung des Hinweises auf die Patenterteilung: **01.08.2012**
(21) Anmeldenummer: 07117303.3
(22) Anmeldetag: 26.09.2007
(51) Int. Cl.: B65G 47/14

(54) **Fördervorrichtung zum Ausrichten und Zuführen von Kleinteilen**
Conveyor for orienting and feeding small parts
Convoyeur pour orienter et acheminer de petites pièces

(30) Priorität: 09.10.2006 DE 102006048025
(43) Veröffentlichungstag der Anmeldung: 16.04.2008
(73) Patentinhaber: Newfrey LLC, Newark, Delaware 19711 (US)
(72) Erfinder: Feierabend, Markus, 35452 Heuchelheim (DE); Lippert, Stefan, 35410 Hungen (DE); Walldorf, Hugo, 35394 Gießen (DE)
(74) Vertreter: Haar, Lucas Heinz Jörn

(56) Entgegenhaltungen:
- WO-A1-2005/007544
- DE-A1- 4 407 644
- DE-C- 746 239

## Beschreibung

Die Erfindung betrifft eine Fördervorrichtung zum Ausrichten und Zuführen von Kleinteilen, wie Bolzen, Stiften, Schrauben oder dergleichen, mit einer Stufenhubfördereinrichtung, die an einer Seite einer geneigten Sammelfläche angeordnet ist und die Kleinteile einer höher gelegenen Förderrinne zuführt, wobei die Förderrinne eine im Wesentlichen horizontal ausgerichtete Schwenkstufe aufweist, die um eine Achse (S) in eine zur Horizontalen geneigte Lage schwenkbar ist.

Eine Fördervorrichtung der eingangs genannten Art ist DE 44 07 644 A1 bekannt. Sie hat eine Schwenkstufe, die mit einer seitlich offenen Nut die Förderrinne bildet. Die Schwenkstufe ist um eine vom Übergabeende entfernte Achse schwenkbar.

Bei einer aus DE 199 43 164 A1 bekannten Fördervorrichtung ist die Förderrinne unmittelbar angrenzend an die Förderstufe der Stufenhubfördereinrichtung ortsfest angeordnet und in einem solchen Winkel zur Horizontalen geneigt, dass die in die Transportrinne gelangenden Kleinteile von alleine die Transportrinne entlang zur Übergabestelle gleiten. Bei Fördereinrichtungen dieser Art besteht jedoch das Problem, dass bei der Aufwärtsförderung durch die Förderstufe Teile übereinander liegend oder in ungünstiger, hochstehender Lage zur Förderrinne transportiert werden und dann nicht so in die Förderrinne fallen, dass eine störungsfreie Weiterförderung gewährleistet ist. Insbesondere Kleinteile wie Schrauben oder Schweißbolzen, die einen Schaft und einen Kopf mit gegenüber dem Schaft größeren Durchmesser haben, neigen dazu, sich miteinander zu verhaken, so dass sie bei der Hochförderung nicht zuverlässig vereinzelt und ausgerichtet werden und bei der Übergabe an die Förderrinne übereinander fallen und den Weitertransport behindern können.

Es ist weiterhin aus FR 2 092 750 eine Fördervorrichtung für Kleinteile bekannt, bei der eine horizontal ausgerichtete Förderschiene in einem trichterförmigen Vorratsbehälter von einer unteren Position in Bodennähe durch den Vorrat an Kleinteilen hindurch in eine höhergelegene Übergabeposition bewegt und dann zur Übergabe in eine zur Horizontalen geneigte Lage geschwenkt wird, so dass die von der Förderrinne aufgenommenen Kleinteile auf eine weiterführende, geneigte Schiene gleiten. Um zu verhindern, dass querliegende Kleinteile nicht von der Förderrinne aufgenommen werden können, ist bei dieser Fördervorrichtung die Förderrinne einseitig durch eine Wand begrenzt und auf der der Wand gegenüber liegenden Seite mit einer Kippkante versehen, deren Abstand von der Wand kleiner ist als die halbe Länge der zu fördernden Teile, so dass diese von der Förderrinne herunterfallen, bevor die Förderrinne die obere Übergabeposition erreicht hat. Bei dieser bekannten Gestaltung kann es aber vorkommen, dass einzelne Teile stehend von der Förderrinne aufgenommen und in dieser Fehllage weitergefördert werden und dadurch Störungen verursachen. Auch die Aufnahme von übereinander liegenden Teilen ist bei dieser bekannten Einrichtung möglich, insbesondere wenn die Teile mit einem abgesetzten Kopf versehen sind.

Bei einem anderen, aus DE 44 13 017 A1 bekannten Fördersystem zum Fördern und Ausrichten von Schrauben, ist an einem Vorratsbehälter eine Stufenhubfördereinrichtung mit einer die Schrauben aufwärts mitnehmenden Förderstufe vorgesehen, die eine nach außen geneigte Mitnehmerstirnfläche hat und die an einer ortsfesten oberen Stirnfläche vorbeibewegt wird, die im gleichen Sinne nach außen abfallend geneigt ist. Die Mitnehmerstirnfläche der Förderstufe ist hierbei in einer vorgegebenen Transportrichtung abfallend geneigt ausgebildet, so dass bei der Aufwärtsbewegung der Förderstufe mitgenommenen Schrauben nacheinander einzeln über die obere Stirnfläche nach außen abgeworfen werden. Auf der Außenseite werden die abgeworfenen Schrauben von einer nach oben offenen Trichterrinne aufgefangen, an deren unteren offenen Ende eine Vibrationsförderrinne vorgesehen ist, die die nacheinander ankommenden Schrauben ausrichtet. Dieses bekannte Fördersystem ist aufwendig und die Förderung der Kleinteile ist hierbei wenig schonend und laut.

Der Erfindung liegt die Aufgabe zugrunde, eine Fördervorrichtung der eingangs genannten Art zu schaffen, welche die aufgezeigten Nachteile vermeidet und ein störungsfreies Ausrichten und Zuführen von Kleinteilen ermöglicht.

Die Aufgabe wird erfindungsgemäß durch eine Fördervorrichtung mit den Merkmalen des Patentanspruchs 1 gelöst. Vorteilhafte Weiterbildungen der Fördereinrichtung sind in den Unteransprüchen angegeben.

Bei der Fördervorrichtung nach der Erfindung weist die Förderrinne in eine im Wesentlichen horizontal ausgerichtete, ortsfeste Lagerstufe und eine bewegliche Schwenkstufe auf, die um eine an einem Übergabeende der Förderrinne angeordnete Achse in eine zur Lagerstufe parallele und eine zur Horizontalen geneigte Lage schwenkbar ist, wobei die Lagerstufe der Stufenhubfördereinrichtung benachbart ist und eine zur Schwenkstufe abfallend geneigte Lagerfläche hat und wobei die Schwenkstufe eine an den Rand der Lagerfläche angrenzende, nach oben offene Hohlkehle aufweist.

Bei der erfindungsgemäßen Gestaltung ist die Förderrinne in zwei Abschnitte, nämlich eine ortsfeste Lagerstufe und eine Schwenkstufe, unterteilt, wobei durch die der Weiterförderung dienende Bewegung der Schwenkstufe Kleinteile, die in Fehllage in die Förderrinne gelangt sind, auf der Zuführseite aus der Förderrinne herausgeworfen werden, so dass sie auf die Sammelfläche zurückfallen. Nur Teile, die in Längsrichtung ausgerichtet in der Hohlkehle der Schwenkstufe liegen, werden beim Hochschwenken mitgenommen und können auf die der Weiterförderung und weiteren Ausrichtung dienende Schiene gelangen. Als besonders vorteilhaft erweist sich die erfindungsgemäße Gestaltung bei Bolzen oder Schrauben, die einen abgesetzten Kopf haben und daher stärker als rein zylindrische Stifte dazu neigen, mit dem Kopf nach unten stehend in die Förderrinne zu gelangen.

Eine vorteilhafte Weiterbildung der Erfindung sieht vor, dass die Schwenkstufe auf der der Lagerstufe abgekehrten Seite eine an die Hohlkehle angrenzende Wand aufweist, welche nach oben über die Hohlkehle hinausragt, wobei die Wand auf der Seite, die der Hohlkehle zugekehrt ist, in einem Abstand von der Hohlkehle eine Rippe mit einer freistehenden scharfen Kante aufweist.

Durch die Anordnung einer solchen Rippe werden Bolzen oder Schrauben, deren Schaft mit einem Gewinde oder einer gewindeähnlichen Oberfläche versehen ist, besser von der aufwärts bewegten Schwenkstufe erfasst, wenn sie sich in stehender Lage in der Förderrinne befinden, aber nicht in Eingriff mit der Hohlkehle sind. Die scharfe Kante kann von zwei ebenen Flächen der Rippe gebildet sein, die einen Winkel im Bereich von 45° bis 75° miteinander bilden.

Es ist weiterhin von Vorteil, wenn die Fläche, die auf der der Hohlkehle zugekehrten Seite an die scharfe Kante angrenzt, in einem Winkel von 15 ° bis 35°, vorzugsweise 30°, zur Vertikalen derart geneigt ist, dass die Fläche von der Kante aus in Richtung der Wand zurückspringt. Die Rippe liegt bei dieser Gestaltung dann über der Hohlkehle und die an die Rippe angrenzende Fläche sorgt für eine Begrenzung des Freiraums über der Hohlkehle, so dass Kleinteile in Fehllage und auch übereinander liegende Kleinteile nicht in die Hohlkehle gelangen können. Über der Rippe können auch weitere scharfkantige Rippen zum Erfassen längerer Gewindeschäfte angeordnet sein.

Eine weitere vorteilhafte Maßnahme zur Verbesserung der Störungsfreiheit der erfindungsgemäßen Fördervorrichtung kann darin bestehen, dass die Wand der Schwenkstufe nahe dem Übergabeende der Förderrinne einen Vorsprung hat, der die Hohlkehle in einem Abstand überragt, und dass im Wirkungsbereich des Vorsprungs neben der Schwenkstufe und angrenzend an die Förder- und Lagerstufen eine Rutsche mit einer schräg nach unten abfallenden Gleitfläche vorgesehen ist. Ist die Wand der Schwenkstufe mit einer Rippe versehen, so wird die Rippe vorzugsweise von dem Vorsprung überragt. Durch den Vorsprung wird erreicht, dass Teile, die trotz Fehllage beim Hochfahren der Schwenkstufe nicht abgeworfen wurden, aus der Hohlkehle herausgedrängt werden, so dass sie auf die Rutsche fallen und auf dieser zur Sammelfläche zurückgleiten. Der Vorsprung hat vorzugsweise eine sich in Förderrichtung zunehmend von der Wand entfernende, geneigte Rampe, damit die mit ihm in Eingriff gelangenden Teile gut abgleiten können und nicht an dem Vorsprung hängen bleiben.

Nach einem weiteren Vorschlag der Erfindung kann die im Wirkungsbereich des Vorsprungs angeordnete Rutsche durch einen geeigneten Antrieb schwingend bewegbar sein. Hierdurch können sich im Bereich der Rutsche auftürmende Kleinteile gelockert und zum Weitergleiten in den Arbeitsbereich der Stufenhubfördereinrichtung gebracht werden.

Die zur Schwenkstufe abfallende Neigung der Lagerfläche der Lagerstufe und der angrenzende Rand der Hohlkehle können nach der Erfindung in einem Winkel von 5° bis 20° zur Horizontalen geneigt sein. Eine Neigung in dieser Größenordnung hat sich als besonders zweckmäßig erwiesen. Ist die Neigung kleiner, so gelangen die Teile nicht zuverlässig in die Hohlkehle. Ist die Neigung größer, so wächst die Gefahr, dass sich Teile aufeinander legen und miteinander verhaken.

Der die Hohlkehle und die seitlich angrenzende Wand bildende Teil der Schwenkstufe kann nach einem weiteren Vorschlag der Erfindung von einer getrennten Schiene gebildet sein, die auswechselbar an einem Schwenkarm befestigt ist. Hierdurch ist es möglich, für unterschiedliche Gestaltungen von Kleinteilen verschieden gestaltete Schienen bereit zu halten, die in ihrer Form für die jeweiligen Kleinteile optimiert sind. Weiterhin kann vorgesehen sein, dass das Übergabeende der Schwenkstufe eine Endfläche hat, die als zur Schwenkachse koaxial Rotationsfläche ausgebildet ist und an welche sich eine Förderschiene mit entsprechend geformter Gegenfläche anschließt. Hierdurch wird verhindert, dass während der Schwenkbewegung zwischen der Schwenkstufe und der Förderschiene ein Spalt entsteht, an dem die geförderten Teile hängen bleiben können.

Um den Bauaufwand der Fördervorrichtung klein zu halten, kann nach einem weiteren Vorschlag der Erfindung die Schwenkstufe durch ein Getriebeelement mit einer Förderstufe der Stufenhubfördereinrichtung gekuppelt sein. Hierdurch kann der Antrieb der Stufenhubfördereinrichtung auch zum Bewegen der Schwenkstufe genutzt werden. Als Getriebeelement kann eine Hubstange vorgesehen sein, die in verschiedenen Abständen von der Schwenkachse mit der Schwenkstufe gelenkig verbindbar ist. Durch Umsetzen des Hubstangengelenks von einer Anschlussstelle an der Schwenkstufe zur einer anderen, kann der Schwenkwinkel der Schwenkstufe verändert werden.

Die Stufenhubfördereinrichtung kann nach der Erfindung mehrere Förderstufen haben, wobei zwischen den Förderstufen jeweils eine ortsfeste Lagerstufe angeordnet ist. Durch die Anwendung mehrerer Förderstufen kann eine bessere Vorausrichtung der Teile bewirkt werden, bevor diese in die Förderrinne gelangen.

Die Erfindung wird nachfolgend anhand eines Ausführungsbeispiels näher erläutert, das in der Zeichnung dargestellt ist. Es zeigen
- Figur 1: eine perspektivische Ansicht der Beschickungsseite einer Fördervorrichtung nach der Erfindung,
- Figur 2: eine perspektivische Ansicht der Fördervorrichtung gemäß Figur 1 ohne Vorratsbehälter und aus einer etwa um 90° gedrehten Richtung,
- Figur 3: eine perspektivische Ansicht der Antriebsseite der Fördervorrichtung gemäß Figur 1,
- Figur 4: einen Querschnitt durch die Förderrinne der Fördervorrichtung gemäß Figur 1 mit einem in einer ersten Fehllage befindlichen Bolzen,
- Figur 5: einen Querschnitt durch die Förderrinne der Fördervorrichtung gemäß Figur 1 mit einem in einer zweiten Fehllage befindlichen Bolzen,
- Figur 6: eine perspektivische Ansicht der auswechselbaren Schiene der Schwenkstufe der Fördervorrichtung gemäß Figur 1 und
- Figur 7: eine perspektivische Ansicht einer alternativen Ausgestaltung einer auswechselbaren Schiene für die Schwenkstufe der Fördervorrichtung gemäß Figur 1.

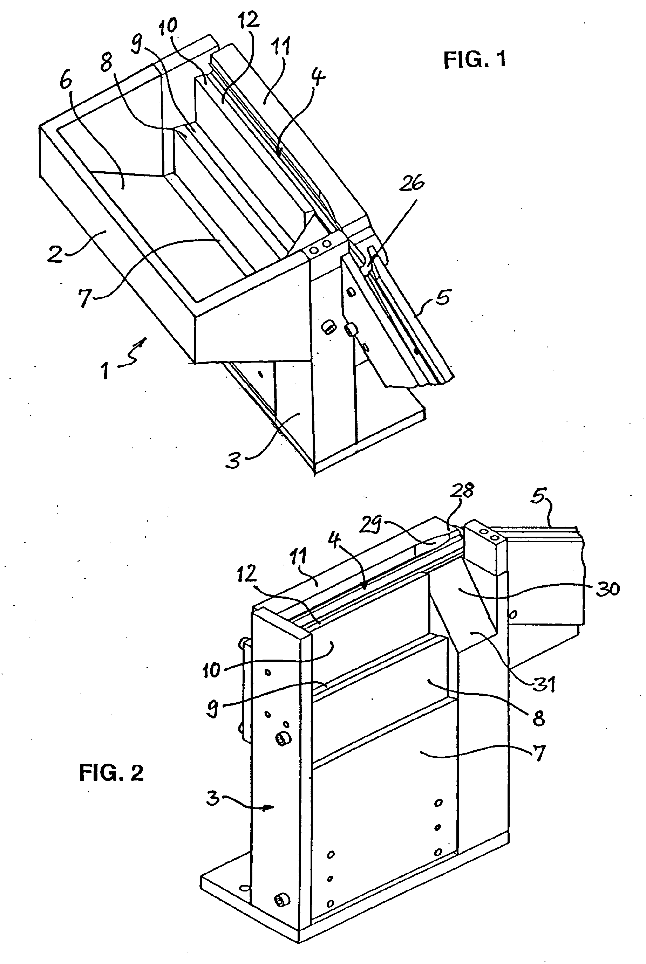

Die in Figur 1 gezeigte Fördervorrichtung 1 weist einen Vorratsbehälter 2, eine Stufenhubfördereinrichtung 3, eine Förderrinne 4 und eine Förderschiene 5 auf. Der Vorratsbehälter 2 hat einen Boden, der eine zur Stufenhubfördereinrichtung 3 abfallend geneigte Sammelfläche 6 bildet, auf der die Kleinteile, beispielsweise Schweißbolzen, zur Stufenhubfördereinrichtung 3 gleiten. Die tiefste Stelle der Sammelfläche 6 endet an einer ersten Förderstufe 7, die durch einen Antrieb aufwärts bewegbar ist und die herangeführten Schweißbolzen zu einer höher gelegenen Lagerstufe 8 fördert. Auf der der Förderstufe 7 abgekehrten Seite der Lagerstufe 8 befindet sich eine zweite Förderstufe 9, die gemeinsam mit der Förderstufe 7 aufwärts bewegbar ist und die Schweißbolzen von der Lagerstufe 8 übernimmt und zur Förderrinne 4 fördert. Die Förderstufen 7, 9 und die Lagerstufe 8 sind als ebene Platten ausgebildet, und ihre oben liegenden Stirnflächen bilden die Stufenflächen, auf denen die Teile gefördert werden. Die Stufenflächen sind jeweils in Richtung auf die nächste Stufe abfallend geneigt, so dass die Teile von einer Stufe auf die nächste rutschen, wenn sich nebeneinander liegende Stufen auf gleicher Höhe befinden. In Längsrichtung verlaufen die Stufenflächen im Wesentlichen horizontal. Die Dicke der die Förderstufen 7, 9 ist so bemessen, dass in Querrichtung immer nur ein Teil auf der Stufenfläche Platz hat, so dass in erster Linie nur solche Teile hochgefördert werden, die in Längsrichtung der Stufenfläche ausgerichtet sind. Querliegende Teile fallen beim Anheben der Förderstufe in der Regel herunter, stehende Teile können jedoch ebenfalls mitgenommen werden und können manchmal stehend bis zur Förderrinne 4 gelangen.

Die Förderrinne 4 besteht aus zwei nebeneinander angeordneten Elementen, nämlich einer ortsfesten Lagerstufe 10 und einer bewegbaren Schwenkstufe 11. Die Lagerstufe 10 weist eine sich horizontal erstreckende und zur Schwenkstufe 11 hin abfallend geneigte Lagerfläche 12 auf. Die Neigung der Lagerfläche 12 beträgt vorzugsweise 15°, kann aber auch kleiner oder größer sein. Auch die Stufenflächen der Förderstufen 7, 9 und der Lagerstufe 8 haben bevorzugt eine Neigung von 15°.

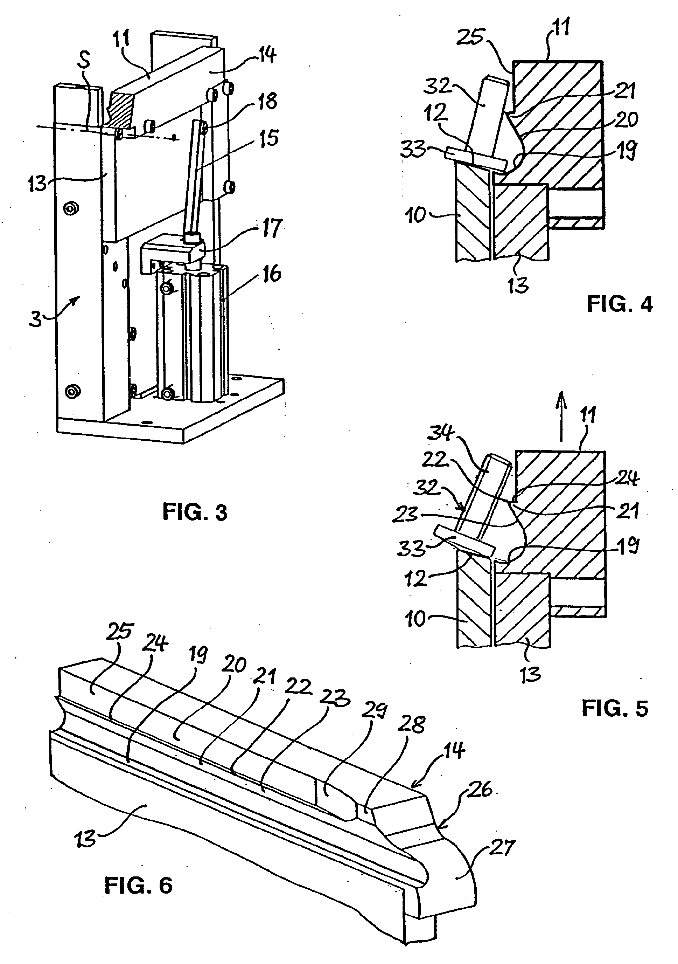

Wie aus Figur 3 zu ersehen, besteht die Schwenkstufe 11 aus einem plattenförmigen Schwenkarm 13 und aus einer Schiene 14. Der Schwenkarm 13 ist seitlich neben der Lagerstufe 10 angeordnet und die Schiene 14 ist an der Oberseite des Schwenkarmes 13 mittels Schrauben lösbar befestigt. An seiner der Förderschiene benachbarten oberen Ecke ist der Schwenkarm 13 um eine zu seiner Plattenebene senkrechte, horizontale Schwenkachse S drehbar gelagert. Eine Hubstange 15 verbindet über Drehgelenke den Schwenkarm 13 mit einer Antriebsvorrichtung 16, die eine zur Bewegungsrichtung der Förderstufen 7, 9 parallele, lineare Antriebsbewegung erzeugt. Über ein Kupplungsstück 17 ist die Antriebsvorrichtung 16 mit der Förderstufe 9 verbunden, welche ihrerseits wiederum mit der Förderstufe 7 gekuppelt ist. Das die Hubstange 15 mit dem Schwenkarm 13 verbindende Drehgelenk 18 kann an verschiedenen Stellen, die jeweils einen anderen Abstand von der Schwenkachse S haben, an dem Schwenkarm 13 befestigt werden, um bei gleichem Arbeitshub der Antriebsvorrichtung 16 unterschiedliche Schwenkwinkel erzeugen zu können.

Wie insbesondere aus den Figuren 4 bis 6 zu ersehen, weist die Schiene 14 der Schwenkstufe 11 eine Hohlkehle 19 auf, an die sich auf der der Lagerstufe 10 abgekehrten Seite eine Wand 20 anschließt, die sich von der Hohlkehle 19 nach oben erstreckt. An der Wand 20 befindet sich oberhalb der Hohlkehle 19 eine Rippe 21 mit einer scharfen Kante 22. Die Rippe 21 wird auf ihrer der Hohlkehle 19 zugekehrten Seite von einer geneigten, in Richtung der Wand 20 zurückspringenden Fläche 23 begrenzt, die an ihrem unteren Rand mit einer konkaven Krümmung in die Hohlkehle 19 übergeht. Oben wird die Kante 22 durch eine ebene Fläche 24 begrenzt, die zur Schwenkachse S parallel ist. Eine ebene, senkrechte Fläche 25 schließt sich nach oben an die Rippe 21 an. Über der Rippe 21 können weitere scharfkantige Rippen übereinander angeordnet sein.

Die Schiene 14 hat ein Übergabeende 26, welches sich an der Schwenkachse S befindet und an welchem die Teile von der Schiene 14 an die Förderschiene 5 übergeben werden. Das Übergabeende 26 ist mit einer zylindrischen Endfläche 27 versehen, deren Achse mit der Schwenkachse S zusammenfällt. Das benachbarte Anschlussende der Förderschiene 5 liegt mit einer entsprechenden zylindrischen Hohlfläche an der Endfläche 27 an. Hierdurch wird ein spaltfreier Übergang von der Schiene 14 zu der Förderschiene 5 geschaffen, der das ungehinderte Hinübergleiten der Teile von der einen Schiene zur nächsten sicherstellt, weil der am Übergang vorhandene, geringe Spalt während der Schwenkbewegung konstant bleibt.

In der Nähe des Übergabeendes 26 aber noch innerhalb des Vorratsbehälters 2 weist die Schiene 14 im Bereich der Fläche 25 einen Vorsprung 28 auf, der auf seiner dem Übergabeende abgekehrten Seite eine zur Fläche 25 geneigte Rampe 29 hat, die sich in Förderrichtung zunehmend von der Wand 20 entfernt. Der Vorsprung 28 ragt über die Rippe 21 hinaus. Im Bereich der Rampe 29 und des Vorsprungs 28 weist die Stufenhubfördereinrichtung 3 unmittelbar angrenzend an die Schwenkstufe 11 eine Rutsche 30 mit einer schräg nach unten abfallenden Gleitfläche 31 auf. Hierdurch können Teile, die durch den Vorsprung 28 von der Schiene 14 heruntergedrückt werden, nach unten fallen und auf die Lagerfläche 6 zurückgeleitet werden. Die Gleitfläche 31 ist so steil angeordnet, dass die Förderstufen 7, 9 in ihrer oberen Endstellung über die Gleitfläche hinausragen. Hierdurch können auf der Rutsche 30 liegende Teile durch die Förderstufen 7, 9 bewegt werden, damit sie besser zur Sammelfläche zurückrutschen.

Im Betrieb der Fördervorrichtung 1 werden die Förderstufen 7, 9 synchron zwischen der in Figur 1 gezeigten unteren Stellung und einer durch die Höhe der Lagerstufen 8 und 10 bestimmten oberen Stellung kontinuierlich auf und ab bewegt. Im selben Rhythmus wird die mit der Antriebsvorrichtung 16 der Förderstufen 7, 9 gekuppelte Schwenkstufe 11 aus der in Figur 1 gezeigten horizontalen Stellung in eine geneigte Stellung bewegt, in der die Hohlkehle 19 der Schwenkstufe 11 etwa die gleiche Neigung wie die Förderschiene 5 hat. Durch die Bewegung der Förderstufen und der Schwenkstufe werden auf der Sammelfläche 6 befindliche Teile, beispielsweise Schweißbolzen, nach oben in die Förderrinne und von dort zur Förderschiene 5 gefördert. Hierbei werden durch die Wirkung der Stufenhubfördereinrichtung 3 und die besondere Gestaltung der Förderrinne 4 die Schweißbolzen so ausgerichtet, dass sie mit in Förderrichtung zeigender Längsachse entweder mit dem Kopf oder dem Schaft voraus nacheinander in die Förderschiene 5 gelangen. Querliegende Schweißbolzen fallen bei der Aufwärtsbewegung von den bewegten Stufen herunter und wieder zur Sammelfläche 6 zurück. Schweißbolzen oder auch Schrauben können aber bedingt durch ihren dickeren Kopf auf ihrem Kopf stehend bis in die Förderrinne hochgefördert werden und die Übergabe an die Förderschiene 5 behindern. Mit der beschriebenen Gestaltung der Förderrinne 4 wird dies, wie nachfolgend beschrieben, jedoch verhindert.

Figur 4 zeigt eine Situation, bei der ein hochgeförderter Schweißbolzen 32 mit seinem Kopf 33 nach unten stehend in die Förderrinne 4 gelangt ist, wobei der Kopf 33 sich teils auf der Lagerfläche 12 und teils in der Hohlkehle 19 befindet. Die Stellung der Schwenkstufe 11 entspricht hierbei der unteren, in Figur 1 gezeigten Stellung. Wird nun die Schwenkstufe 11 hochgeschwenkt, so wird der Schweißbolzen 32 von der nach oben bewegten Hohlkehle 19 einseitig angehoben und nach außen gekippt, so dass er über den Rand der Lagerstufe 10 nach unten fällt. Die Weiterförderung des Schweißbolzens 32 in Richtung der Förderschiene 5 und dadurch mögliche Störungen sind somit vermieden.

Figur 5 zeigt eine andere mögliche Fördersituation, bei der der Schweißbolzen 32 mit seinem Kopf 33 nur auf der Lagerfläche 12 ruht. Je nach Länge und Neigung kann der Schweißbolzen 32 außerdem mit dem Ende seines Schaftes 34 an der Fläche 25 anliegen. Wird nun die Schwenkstufe 11 in Pfeilrichtung nach oben geschwenkt, so kann die Hohlkehle 19 den Schweißbolzen 32 nicht nach außen kippen. Stattdessen gelangt in diesem Fall die Rippe 21 mit ihrer scharfen Kante 22 in Eingriff mit dem Außengewinde des Schaftes 34, wodurch der Schweißbolzen 32 angehoben und ebenfalls nach außen gekippt und abgeworfen wird.

Kommt es trotz der beschriebenen Maßnahmen zu einer Weiterförderung eines stehend angeordneten Schweißbolzens 32 in Richtung des Übergabeendes 26, so sorgen der Vorsprung 28 und die im Wirkungsbereich des Vorsprungs 28 steil nach unten abfallende Gleitfläche 31 der Rutsche 30 dafür, dass der Schweißbolzen 32 seinen Halt verliert und nach unten fällt, ohne die Weiterförderung der nachfolgenden richtig ausgerichteten Schweißbolzen zu behindern. Die Weiterförderung der Schweißbolzen zur Förderschiene 5 erfolgt allein durch das Hochschwenken der Schwenkstufe in eine zur Horizontalen geneigte Lage und das Abgleiten der Schweißbolzen längs der Hohlkehle infolge ihres Eigengewichts. In ihrer hochgeschwenkten Endlage steht die Schwenkstufe in einer idealen Position zur ebenfalls geneigten Förderschiene 5, welche die Teile übernimmt und weiterleitet.

Mit der beschriebenen Fördervorrichtung wird eine exakte Zuführung des Fördergutes zu einem an die Förderstufe angeschlossenen Vereinzelungssystem erreicht. Das Fördergut wird zuverlässig für die weitere Vereinzelung vorausgerichtet und Störungen der Förderungen werden weitgehend vermieden. Die Fördervorrichtung kommt mit einem einzigen Antrieb aus und ist daher kostengünstig. Das Fördergut wird schonend gefördert und der Verschleiß des Fördergutes ist deutlich geringer als bei Vibrations- und Trommelförderern. Ein weiterer Vorteil ist, dass die Geräuschemission während des Betriebs gering ist.

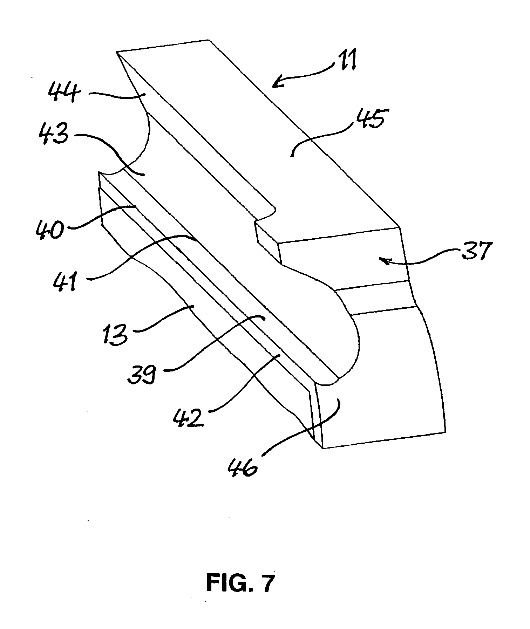

Figur 7 zeigt eine alternative Ausgestaltung einer Schiene 37, die anstelle der Schiene 14 an dem plattenförmigen Schwenkarm 13 der Schwenkstufe 11 befestigt werden kann. Die Schiene 37 weist eine Hohlkehle 39 auf, die von zwei Längskanten 40, 41 begrenzt wird. Die Längskante 40 befindet sich an der der Lagerstufe 10 gegenüberliegenden seitlichen Begrenzungsfläche 42, die in einem spitzen Winkel mit der Hohlkehle 39 zusammentrifft. An die Längskante 41 schließt sich eine konkav gekrümmte Hohlfläche 43 an, die sich nach oben erstreckt und nahezu stufenlos in eine ebene Wandfläche 44 übergeht. Die Wandfläche 44 erstreckt sich bis zur Oberseite 45 der Schiene 37. Die Hohlkehle 39 hat einen kleineren Krümmungsradius als die Hohlfläche 43 und bildet an der Längskante 41 mit der Hohlfläche 43 einen stumpfen Winkel von etwa 170° oder kleiner. Am Übergabeende 46 der Schiene 37 kann die Hohlkehle 39 noch tiefer sein und einen entsprechend kleineren Krümmungsradius haben.

Durch die beschriebene Gestaltung der Schiene 37 werden Schweißbolzen mit großem Kopf und kleinem Schaft in ihre Lage auf der Schiene 37 zusätzlich stabilisiert und die Schweißbolzen zeigen ein besseres Rutschverhalten auf der Schiene 37 und ein besseres Einlaufverhalten beim Einlaufen in die sich anschließende Förderschiene 5. Bei der Schiene 37 ist im Gegensatz zur Schiene 14 oberhalb der Hohlkehle 39 eine spitzwinklige Kante an der Wandfläche 44 nicht vorgesehen. Die Schiene 37 kann aber bei Bedarf auch mit einer solchen Kante versehen werden.

## Patentansprüche

1. Fördervorrichtung zum Ausrichten und Zuführen von Kleinteilen, wie Bolzen, Stiften, Schrauben oder dergleichen, mit einer Stufenhubfördereinrichtung, die an einer Seite einer geneigten Sammelfläche angeordnet ist und die Kleinteile einer höher gelegenen Förderrinne zuführt, wobei die Förderrinne (4) eine im Wesentlichen horizontal ausgerichtete Schwenkstufe (11) aufweist, die um eine Achse (S) in eine zur Horizontalen geneigte Lage schwenkbar ist, **dadurch gekennzeichnet, dass** die Förderrinne (4) eine im Wesentlichen horizontal ausgerichtete, ortsfeste Lagerstufe (10) aufweist und die bewegliche Schwenkstufe (11) um die an einem Übergabeende der Förderrinne (4) angeordnete Achse (S) in eine zur Lagerstufe (10) parallele Lage schwenkbar ist, wobei die Lagerstufe (10) der Stufenhubfördereinrichtung (3) benachbart ist und eine zur Schwenkstufe (11) abfallend geneigte Lagerfläche (12) hat und wobei die Schwenkstufe (11) eine an den Rand der Lagerfläche (12) angrenzende, nach oben offene Hohlkehle (19) aufweist.

2. Fördervorrichtung nach Anspruch 1, **dadurch gekennzeichnet, dass** die Schwenkstufe (11) auf der der Lagerstufe (10) abgekehrten Seite eine an die Hohlkehle (19) angrenzende Wand (20) aufweist, welche nach oben über die Hohlkehle (19) hinausragt.

3. Fördervorrichtung nach Anspruch 2, **dadurch gekennzeichnet, dass** die Wand (20) auf der Seite, die der Hohlkehle (19) zugekehrt ist, in einem Abstand von der Hohlkehle (19) eine Rippe (21) mit einer freistehenden scharfen Kante (22) aufweist.

4. Fördervorrichtung nach Anspruch 3, **dadurch gekennzeichnet, dass** die scharfe Kante (22) von zwei ebenen Flächen der Rippe (21) gebildet ist, die einen Winkel im Bereich von 45° bis 75° miteinander bilden.

5. Fördervorrichtung nach Anspruch 2, **dadurch gekennzeichnet, dass** die Wand eine konkav gekrümmte Hohlfläche (43) aufweist, die mit der angrenzenden Hohlkehle (39) eine stumpfwinklige Kante bildet.

6. Fördervorrichtung nach Anspruch 5, **dadurch gekennzeichnet, dass** die Hohlkehle (39) einen kleineren Krümmungsradius aufweist als die angrenzende Hohlfläche (43).

7. Fördervorrichtung nach einem der vorhergehenden Ansprüche, **dadurch gekennzeichnet, dass** die auf der der Hohlkehle (19) zugekehrten Seite an die scharfe Kante (22) angrenzende Fläche (23) in einem Winkel von 15° bis 35°, insbesondere von 30°, zur Vertikalen derart geneigt ist, dass die Fläche (23) von der Kante (22) aus in Richtung der Wand (20) zurückspringt.

8. Fördervorrichtung nach einem der vorhergehenden Ansprüche, **dadurch gekennzeichnet, dass** die Wand (20) der Schwenkstufe (11) nahe dem Übergabeende (26) der Förderrinne (4) einen die Rippe (21) überragenden Vorsprung (28) hat und dass im Bereich des Vorsprungs (28) eine Rutsche (30) mit einer schräg nach unten abfallenden Gleitfläche (31) vorgesehen ist.

9. Fördervorrichtung nach Anspruch 8, **dadurch gekennzeichnet, dass** der Vorsprung (28) eine sich in Förderrichtung von der Wand (20) entfernende, geneigte Rampe (29) hat.

10. Fördervorrichtung nach Anspruch 8, **dadurch gekennzeichnet, dass** die Rutsche (30) schwingend bewegbar ist.

11. Fördervorrichtung nach einem der vorhergehenden Ansprüche, **dadurch gekennzeichnet, dass** die Stufenhubfördereinrichtung (3) mehrere Förderstufen (7, 9) hat, wobei zwischen den Förderstufen (7, 9) jeweils eine ortsfeste Lagerstufe (8) angeordnet ist.

12. Fördervorrichtung nach dem vorhergehenden Anspruch, **dadurch gekennzeichnet, dass** die Förderstufen (7, 9) der Stufenhubfördereinrichtung (3) seitlich neben der Rutsche (30) angeordnet sind und in ihrer oberen Endstellung über die Gleitfläche (31) der Rutsche (30) hinausragen.

13. Fördervorrichtung nach einem der vorhergehenden Ansprüche, **dadurch gekennzeichnet, dass** die zur Schwenkstufe (11) abfallende Neigung der Lagerfläche (12) der Lagerstufe (10) und der angrenzende Rand der Hohlkehle (19) in einem Winkel von 5° bis 20° zur Horizontalen geneigt ist.

14. Fördervorrichtung nach einem der vorhergehenden Ansprüche, **dadurch gekennzeichnet, dass** der die Hohlkehle (19) und die seitlich angrenzende Wand (20) bildende Teil der Schwenkstufe (11) von einer getrennten Schiene (14) gebildet ist, die auswechselbar an einem Schwenkarm (13) befestigt ist.

15. Fördervorrichtung nach einem der vorhergehenden Ansprüche, **dadurch gekennzeichnet, dass** das Übergabeende (26) der Schwenkstufe (11) eine Endfläche (27) hat, die als zur Schwenkachse (S) koaxiale Rotationsfläche ausgebildet ist und an welche sich eine Förderschiene (5) mit entsprechend geformter Gegenfläche anschließt.

16. Fördervorrichtung nach einem der vorhergehenden Ansprüche, **dadurch gekennzeichnet, dass** die Schwenkstufe (11) durch ein Getriebeelement mit einer Förderstufe (9) der Stufenhubfördereinrichtung (3) gekuppelt ist.

17. Fördervorrichtung nach dem vorhergehenden Anspruch, **dadurch gekennzeichnet, dass** Getriebeelement eine Hubstange (15) ist, die in verschiedenen Abständen von der Schwenkachse (S) mit der Schwenkstufe (11) gelenkig verbindbar ist.

## Claims

1. Conveyor for orienting and feeding small parts such as studs, pins, screws, and the like, having a platform elevator conveying mechanism that is arranged on one side of an inclined collecting surface and that feeds small parts to a conveying trough located at a higher elevation, wherein the conveying trough (4) has an essentially horizontal platform (11) that can pivot, about an axis (S) into a position inclined to the horizontal, **characterized in that** the conveying trough (4) has an essentially horizontal stationary storage platform (10) and the movable pivoting platform (11) can pivot, about an axis (S) located at a delivery end of the conveying trough (4), into a position parallel to the storage platform (10), wherein the storage platform (10) is adjacent to the platform elevator conveying mechanism (3) and has a storage surface (12) inclined downward toward the pivoting platform (11), and wherein the pivoting platform (11) has a hollow throat (19) that is open at the top and is located adjacent to the edge of the storage platform (12).

2. Conveyor according to claim 1, **characterized in that** the pivoting platform (11) has, on the side away from the storage platform (10), a wall (20) adjacent to the hollow throat (19), with the wall extending upward over the hollow throat (19).

3. Conveyor according to claim 2, **characterized in that** the wall (20) has, on the side facing the hollow throat (19) and a distance away from the hollow throat (19), a rib (21) with a sharp freestanding edge (22).

4. Conveyor according to claim 3, **characterized in that** the sharp edge (22) is formed by two flat surfaces of the rib (21) that enclose an angle in the range from 45° to 75° with one another.

5. Conveyor according to claim 2, **characterized in that** the wall has a curved, concave surface (43), which forms an obtuse-angled edge with the adjacent hollow throat (39).

6. Conveyor according to claim 5, **characterized in that** the hollow throat (39) has a smaller radius of curvature than the adjacent concave surface (43).

7. Conveyor according to one of the preceding claims, **characterized in that** the surface (23) that adjoins the sharp edge (22) on the side facing the hollow throat (19) is inclined at an angle of 15° to 35°, preferably 30°, to the vertical, such that the surface (23) recedes in the direction of the wall (20) starting from the edge (22).

8. Conveyor according to one of the preceding claims, **characterized in that** the wall (20) of the pivoting platform (11) near the delivery end (26) of the conveying trough (4) has a projection (28) projecting over the rib (21), and **in that** a slide (30) with a sliding surface (31) that is inclined downward at an angle is provided in the area of action of the projection (28).

9. Conveyor according to claim 8, **characterized in that** the projection (28) has an inclined ramp (29) whose distance from the wall (20) increases in the direction of conveyance.

10. Conveyor according to claim 8, **characterized in that** the slide (30) can be set in vibratory motion.

11. Conveyor according to one of the preceding claims, **characterized in that** the platform elevator conveying mechanism (3) has multiple conveying platforms (7, 9), wherein a stationary storage platform (8) is located between each of the conveying platforms (7, 9).

12. Conveyor according to the preceding claim, **characterized in that** the conveying platforms (7, 9) of the platform elevator conveying mechanism (3) are located laterally next to the slide (30), and at their upper end position they project over the sliding surface (31) of the slide (30).

13. Conveyor according to one of the preceding claims, **characterized in that** the downward inclination of the storage surface (12) of the storage platform (10) toward the pivoting platform (11), and the adjacent edge of the hollow throat (19), are inclined at an angle of 5° to 20° to the horizontal.

14. Conveyor according to one of the preceding claims, **characterized in that** the part of the pivoting platform (11) forming the hollow throat (19) and laterally adjacent wall (20) is composed of a separate rail (14), which is removably attached to a pivoting arm (13).

15. Conveyor according to one of the preceding claims, **characterized in that** the delivery end (26) of the pivoting platform (11) has an end surface (27) designed as a surface of rotation coaxial to the pivot axis (S), and which is abutted by a conveying rail (5) with a suitably shaped mating surface.

16. Conveyor according to one of the preceding claims, **characterized in that** the pivoting platform (11) is coupled to a conveying platform (9) of the platform elevator conveying mechanism (3) by means of a transmission element.

17. Conveyor according to the preceding claim, **characterized in that** the transmission element is a push rod (15), which can be attached in an articulated fashion to the pivoting platform (11) at varying distances from the pivot axis (S).

## Revendications

1. Dispositif de transport pour orienter et acheminer de petites pièces, tels des boulons, des chevilles, des vis ou similaires, avec un dispositif de transport levant échelonné, qui est agencé contre un côté d'une surface collectrice inclinée et qui achemine les petites pièces vers une rigole de transport située plus haut, dans lequel la rigole de transport (4) présente un échelon pivotant (11) orienté de manière sensiblement horizontale, qui peut pivoter autour d'un axe (S) vers une position inclinée par rapport à l'horizontale, **caractérisé en ce que** la rigole de transport (4) présente un échelon de dépôt (10) fixe, orienté de manière sensiblement horizontale et l'échelon pivotant (11) mobile peut pivoter autour de l'axe (S) agencé à une extrémité de transmission de la rigole de transport (4) et vers une position parallèle à l'échelon de dépôt (10), dans lequel l'échelon de dépôt (10) avoisine le dispositif de transport levant échelonné (3) et a une surface de dépôt (12) inclinée en pente descendante par rapport à l'échelon pivotant (11), et dans lequel échelon pivotant (11) présente une gorge (19) ouverte vers le haut et contiguë au bord de la surface de dépôt (12).

2. Dispositif de transport selon la revendication 1, **caractérisé en ce que** l'échelon pivotant (11) présente, du côté opposé à l'échelon de dépôt (10), une paroi (20) contiguë à la gorge (19), qui dépasse vers le haut au-delà de la gorge (19).

3. Dispositif de transport selon la revendication 2, **caractérisé en ce que** la paroi (20) présente, sur le côté tourné vers la gorge (19), à distance de la gorge (19), une nervure (21) avec un bord coupant isolé (22).

4. Dispositif de transport selon la revendication 3, **caractérisé en ce que** le bord coupant (22) est formé de deux surfaces planes de la nervure (21) qui forment conjointement un angle dans la plage de 45° à 75°.

5. Dispositif de transport selon la revendication 2, **caractérisé en ce que** la paroi présente une surface creuse (43) à courbure concave qui forme, avec la gorge (39) contiguë, un bord à angle obtus.

6. Dispositif de transport selon la revendication 5, **caractérisé en ce que** la gorge (39) présente un rayon de courbure inférieur à celui de la surface creuse (43) contiguë.

7. Dispositif de transport selon l'une quelconque des revendications précédentes, **caractérisé en ce que** la surface (23) contiguë, sur le côté tourné vers la gorge (19), au bord coupant (22) est inclinée d'un angle de 15° à 35°, en particulier de 30°, par rapport à la verticale de sorte que la surface (23) est en retrait à partir du bord (22) en direction de la paroi (20).

8. Dispositif de transport selon l'une quelconque des revendications précédentes, **caractérisé en ce que** la paroi (20) de l'échelon pivotant (11) présente, à proximité de l'extrémité de transmission (26) de la rigole de transport (4), une avancée (28) dépassant de la nervure (21) et **en ce qu'**un plan incliné (30) avec une surface de glissement (31) en pente descendante oblique est prévue dans la zone de l'avancée (28).

9. Dispositif de transport selon la revendication 8, **caractérisé en ce que** l'avancée (28) présente une rampe (29) inclinée s'écartant de la paroi (20) dans le sens du transport.

10. Dispositif de transport selon la revendication 8, **caractérisé en ce que** le plan incliné (30) peut être déplacé par oscillation.

11. Dispositif de transport selon l'une quelconque des revendications précédentes, **caractérisé en ce que** le dispositif de transport levant échelonné (3) a plusieurs échelons de transport (7, 9), dans lequel un échelon de dépôt (8) fixe est respectivement agencé entre les échelons de transport (7, 9).

12. Dispositif de transport selon la revendication précédente, **caractérisé en ce que** les échelons de transport (7, 9) du dispositif de transport levant échelonné (3) sont agencées latéralement à côté du plan incliné (30) et dépassent, dans leur position finale supérieure, au-delà de la surface de glissement (31) du plan incliné (30).

13. Dispositif de transport selon l'une quelconque des revendications précédentes, **caractérisé en ce que** l'inclinaison de la surface de dépôt (12), en pente descendante par rapport à l'échelon pivotant (11), est inclinée vers l'échelon de dépôt (10) et la bordure contiguë de la gorge (19) dans un angle de 5° à 20° par rapport à l'horizontale.

14. Dispositif de transport selon l'une quelconque des revendications précédentes, **caractérisé en ce que** la partie de l'échelon pivotant (11) formant la gorge (19) et la paroi (20) latéralement contiguë est formée par un rail séparé (14) qui est fixé de manière échangeable sur un bras pivotant (13).

15. Dispositif de transport selon l'une quelconque des revendications précédentes, **caractérisé en ce que** l'extrémité de transmission (26) de l'échelon pivotant (11) a une surface d'extrémité (27) qui se présente sous la forme d'une surface de rotation coaxiale avec l'axe de pivotement (S), et à laquelle est raccordé un rail de transport (5) avec une surface antagoniste de forme correspondante.

16. Dispositif de transport selon l'une quelconque des revendications précédentes, **caractérisé en ce que** l'échelon pivotant (11) est couplé par un élément d'entraînement à un échelon de transport (9) du dispositif de transport levant échelonné (3).

17. Dispositif de transport selon la revendication précédente, **caractérisé en ce que** l'élément d'entraînement est une tige de levage (15) qui peut être raccordée de manière articulée à l'échelon pivotant (11) à différentes distances de l'axe de pivotement (S).
